# EUROPÄISCHE PATENTSCHRIFT

(11) **EP 3 899 597 B1**
(45) Veröffentlichungstag und Bekanntmachung des Hinweises auf die Patenterteilung: **02.07.2025**
(21) Anmeldenummer: 19832951.8
(22) Anmeldetag: 20.12.2019
(51) Int. Cl.: G01V 5/22

(54) **DUAL-ENERGIE-DETEKTOR SOWIE VERFAHREN ZUR VERBESSERUNG DAMIT ERZEUGTER BILDDATEN**
DUAL ENERGY DETECTOR AND METHOD FOR IMPROVING IMAGE DATA GENERATED THEREBY
DÉTECTEUR À DOUBLE ÉNERGIE, ET PROCÉDÉ D'AMÉLIORATION DE DONNÉES AINSI PRODUITES

(30) Priorität: 21.12.2018 DE 102018133525
(43) Veröffentlichungstag der Anmeldung: 27.10.2021
(73) Patentinhaber: Smiths Detection Germany GmbH, 65205 Wiesbaden (DE)
(72) Erfinder: FRANK, Alexander, 65205 Wiesbaden (DE)
(74) Vertreter: Klunker IP Patentanwälte PartG mbB
(86) Internationale Anmeldenummer: PCT/EP2019/086706
(87) Internationale Veröffentlichungsnummer: WO 2020/127989

(56) Entgegenhaltungen:
- EP-A1- 2 960 686
- US-A- 5 841 832
- US-A1- 2010 172 464

## Beschreibung

### Technisches Gebiet

Die vorliegende Offenbarung betrifft allgemein die zerstörungsfeie Inspektion von Objekten mittels Röntgeninspektion mit Dual-Energie-Detektion zum Auffinden von Zielgegenständen. Im Besonderen betrifft die vorliegende Offenbarung ein Verfahren zur Verbesserung der von einem Dual-Energie-Detektor bereitgestellten Detektordaten.

### Hintergrund

Die folgende einleitende Beschreibung dient lediglich zum besseren Verständnis der hier beschriebenen technischen Zusammenhänge und soll keinesfalls als zugestandener Stand der Technik verstanden werden, wenn es nicht ausdrücklich als solcher gekennzeichnet ist.

Die Diskriminierung von Materialien mittels Dual-Energie-Technik ist grundsätzlich bekannt; siehe beispielsweise S. Kolkoori et al., "Dual High-Energy X-ray Digital Radiography for Material Discrimination in Cargo Containers" 11th European Conference on Non Destructive Testing, 2014, Prague, Proceedings. Die Dual Energy-Technik basiert darauf, dass die Energieabhängigkeit des Schwächungskoeffizienten eines Materials eine Eigenschaft des Materials ist. Daher können mittels energieaufgelösten (im Sinne von spektral selektiv) Messungen Detektordaten, die für eine quantitative Berechnung der Materialeigenschaften benötigt werden, erfasst werden. In der Praxis können diese energieaufgelösten Messungen durch Aufnahme zweier Röntgenbilder mit unterschiedlichen Röntgenspektren erhalten werden. Etabliert ist die Verwendung eines sogenannten Dual-Energy-Detektors, dessen spezieller Aufbau im Wesentlichen zwei Energiekanäle bereitstellt und damit die benötigten Hochenergie (Hi)- und Niedrigenergie (Lo)-Detektordaten mit einer Messung erhalten werden können.

EP 1 010 021 B1 zeigt einen Dual-Energie-Röntgenstrahlen-Detektor. Der Detektor weist auf: eine Lo-Detektorzeile mit ersten Lo-Detektorelementen, die auf die Röntgenstrahlung in einem ersten Energiebereich mit niedriger Energie ansprechen, um eine erste Strahlungsempfindlichkeit bereitzustellen, und eine Hi-Detektorzeile mit zweiten Hi-Detektorelementen, die auf die Strahlung eines zweiten hohen Energiebereichs ansprechen, um eine zweite Strahlungsempfindlichkeit bereitzustellen. Die Lo-Detektorzeile und die Hi-Detektorzeile sind beide quer zur Abtastrichtung eines Objekts derart hintereinander angeordnet, dass die ersten Detektorelemente und die zweiten Detektorelemente die zu messende Röntgenstrahlung unabhängig voneinander empfangen können.

Figur 1 zeigt eine Querschnittansicht einer Ausführung eines aus der EP 1 010 021 B1 bekannten Detektors 200. Röntgenstrahlen sind symbolisch von oben nach unten einstrahlend gezeigt. Der Detektor 200 besteht aus einer Platine 210, zwei Schnittstellen 215A und 215B, einer Lo-Masse 220, einer Lo-Fotodetektorzeile 230 mit Lo-Fotodioden, einer Lo-Verdrahtung 235, einem Lo-Kristall 240 als Szintillator, einer Lo-Beschichtung 245, einem Filter 250, einer Hi-Masse 260, einer Hi-Fotodetektorzeile 270 mit Hi-Fotodioden, einer Hi-Verdrahtung 275, einem Hi-Kristall 280 als Szintillator und einer Hi-Beschichtung 285. Die Platine 210 trägt somit zwei Detektorzeilen 230 und 270 und die Schnittstellen 215A und 215B.

Die Lo-Masse 220 aus vergoldetem Kupfer verbindet als gemeinsame Masse eine gemeinsame Kathode der Fotodioden der Lo-Fotodetektorzeile 230. Die Lo-Fotodetektorzeile 230 spricht auf Lo-Röntgenstrahlung an, indem der Lo-Kristall 240 als Szintillator Röntgenfotonen des Lo-Bereichs in Fotonen sichtbaren Lichts umwandelt, die von den Fotodioden erfasst werden können. Die Lo-Fotodioden erfassen das Licht, dass in dem jeweiligen Detektorelement gemäß dem Intensitätsprofil des Lo-Kristalls 240 als Szintillator erzeugt wird, und erzeugen daraus ein entsprechendes analoges Signal. Das analoge Signal jeder einzelnen Fotodiode wird über die Schnittstelle 215A an die (nicht gezeigte) Datenverarbeitungsplatine geleitet. Die Lo-Verdrahtung 235 verbindet die Ausgänge der einzelnen Fotodioden mit den entsprechenden Anschlüssen der Lo-Schnittstelle 215A.

Das Filter 250 aus einem Material mit einer hohen Ordnungszahl, wie Silber, Gold oder Kupfer, verstärkt die Fähigkeit der Detektorzeile, Hi-Strahlung zu erfassen. Die Hi-Masse 260 aus vergoldetem Kupfer verbindet als gemeinsame Masse die Kathoden der Fotodioden der Hi-Fotodetektorzeile 270. Jede der Fotodioden spricht auf Hi-Röntgenstrahlung an und wandelt, ähnlich wie bei der Lo-Fotodetektorzeile erläutert, gemäß dem Intensitätsprofil des Szintillator-Materials erzeugtes Licht, das der erfassten Hi-Strahlung entspricht, in ein analoges Signal. Das analoge Signal von jeder Fotodiode wird anschließend über die Schnittstelle 215B an die Datenverarbeitungsplatine geleitet.

Die Anzahl der Fotodioden, der Abstand zwischen den und die Abmessungen der Fotodioden in jeder der Fotodetektorzeilen definieren die Auflösung der Abtastung in der entsprechenden Abtastzeile; diese Parameter sind bei der Hi-Fotodiodenzeile 270 und der Lo-Fotodiodenzeile 230 gleich.

In der Anwendung können mit dem bekannten Dual-Energie-Detektor für ein Inspektionsobjekt parallel zeilenweise für alle Bildpunkte, die für die Materialdiskriminierung benötigten zwei gemessenen Detektordaten pro Bildpunkt erfasst werden. Dabei werden jedoch die Hi-Detektordaten und die Lo-Detektordaten bei Betrachtung einer bestimmten Objektzeile nicht gleichzeitig, sondern aufeinanderfolgend, also zu unterschiedlichen Zeitpunkten erfasst, indem die bestimmte Objektzeile zunächst von der Lo-Detektorzeile abgetastet wird und anschließend, nachdem das Objekt um eine Detektorzeilenbreite weiterbewegt wurde, die bestimmte Objektzeile von der Hi-Detektorzeile abgetastet (oder umgekehrt, je nach Anordnung der beiden Detektorzeilen in Transportrichtung des Objekts).

DE 10 2011 053 971 A1, US 9 885 801 B2, US 2014 01 98 899 A1 und die US 5 841 833 A zeige jeweils Detektorzeilen mit darin abwechselnd angeordneten Detektorelementen unterschiedlicher spektraler Sensitivität.

EP 2 960 686 A1 sowie US 2010/172464 A1 zeigen ebenfalls jeweils einen Dual-Energie-Röntgenstrahlendetektor mit Detektorzeilen, in denen abwechselnd Detektorelementen unterschiedlicher spektraler Sensitivität angeordnet sind, zur Verwendung in einem Dual-Energie-Röntgenverfahren in einer CT-Röntgenanlage, die gemäß dem Computertomographieverfahren arbeitet.

US 5 841 832 A zeigt einen Dual-Energie-Röntgenstrahlendetektor zur Verwendung in einem Dual-Energie-Röntgenverfahren, mit einer quer zur Abtastrichtung anzuordnenden Detektorzeile bestehend aus auf ein Röntgenspektrum unterschiedlich ansprechenden Niedrigenergie- und Hochenergie-Detektorelementen, die jeweils abwechselnd sowohl in jeder der Detektorzeilen sowie in benachbarten Detektorzeilen nebeneinander angeordnet sind. Die Niedrigenergie- und Hochenergie-Detektorelemente erfassen Röntgenstrahlung unabhängig voneinander und erzeugen entsprechende Niedrigenergie- und Hochenergie-Detektordaten. Weiter ist ein Verfahren zur Korrektur dieser Niedrigenergie- und Hochenergie-Detektordaten gezeigt, wobei fehlende Niedrigenergie-Detektordaten für den Ort eines Hochenergie-Detektorelements erzeugt werden, indem ein Interpolationswert gemessener Niedrigenergie-Detektordaten von zu diesem Hochenergie-Detektorelement benachbarten Niedrigenergie-Detektorelementen aus einer Detektorzeile oder aus einer Detektorzeile und der benachbarten Detektorzeile berechnet wird.

### Zusammenfassung

Bei einer Detektorzeile, bei der in ein und derselben Zeile Hi-Detektorelemente und Lo-Detektorelemente abwechselnd nebeneinander angeordnet sind, kann mit den in quer zur Abtastrichtung nebeneinander angeordneten Detektorelementen ein Inspektionsobjekt mit einer gewünschten Auflösung abgetastet werden, dabei werden für jeden Detektorort, d.h. Bildpunkt, nur entweder Hi-Detektordaten oder Lo-Detektordaten gemessen und die jeweils am Ort eines Detektorelements nicht erfassten Detektordaten können gemäß US 5 841 832 A mittels Interpolation berechnet werden, sodass die für eine Materialdiskriminierung benötigten Dual-Energie-Informationen zur Verfügung stehen.

Es ist es eine Aufgabe der Erfindung ein verbessertes Verfahren zur Korrektur der mit einem solchen Dual-Energie-(Röntgenstrahlen-)Detektor derartig erfasster erster und zweiter Detektordaten vorzuschlagen.

Die Aufgabe wird mit den Merkmalen des Verfahrens des unabhängigen Anspruchs 1 gelöst. Weitere Ausführungsformen sind in den Ansprüchen 2 bis 9 angegeben.

Zum besseren Verständnis werden zunächst der Dual-Energie-(Röntgenstrahlen-)Detektor und die Röntgeninspektionsanlage erläutert, mittels derer die mit dem Verfahren zu korrigierenden Detektordaten erzeugt werden.

Der Dual-Energie-Detektor als erster Aspekt weist auf: eine quer zu einer Abtastrichtung anzuordnende Detektorzeile gebildet aus auf ein Röntgenspektrum unterschiedlich ansprechenden ersten

Detektorelementen und zweiten Detektorelementen, die jeweils abwechselnd in der Detektorzeile nebeneinander angeordnet sind. Die ersten und zweiten Detektorelemente erfassen Röntgenstrahlung unabhängig voneinander und erzeugen jeweils nur erste Detektordaten oder zweite Detektordaten. D.h., aufgrund der jeweils voreingestellten Sensitivität für Röntgenstrahlen des Röntgenspektrums erfassen die ersten und zweiten Detektorelemente jeweils selektiv nur entsprechende erste Detektordaten des Röntgenspektrums oder zweite Detektordaten des Röntgenspektrums.

Die ersten Detektorelemente können beispielsweise Lo-Detektorelemente sei und zweiten Detektorelemente können Hi-Detektorelemente sein. D.h., die ersten Detektorelemente sprechen auf Röntgenstrahlen eines Lo-Bereichs des Röntgenspektrums an und die zweiten Detektorelemente sprechen auf Röntgenstrahlung eines Hi-Bereichs des Röntgenspektrums an. Die zweiten Detektorelemente können auch so ausgelegt sein, dass sie auf Röntgenstrahlung eines größeren Bereichs des gesamten Röntgenspektrums, aber wenigstens des Hi-Bereichs des Röntgenspektrums ansprechen.

Die ersten Detektordaten des Röntgenspektrums der ersten Detektorelemente liefern hauptsächlich Materialinformationen dahingehend, wie gut ein durchstrahltes Material Röntgenstrahlen niedriger Energie passieren ließ. Die zweiten Detektordaten des Röntgenspektrums der zweiten Detektorelemente liefern hauptsächlich Materialinformationen dahingehend, wie gut ein durchstrahltes Material Röntgenstrahlen hoher Energie passieren ließ.

Bei Durchstrahlung eines Inspektionsobjekts mit Röntgenstrahlen, die wenigstens Röntgenstrahlen im Lo-Bereich und im Hi-Bereich der Detektorelemente enthalten, können mit der Detektoranordnung jeweils für jedes Detektorelement zugehörige Röntgenstrahlenintensitäten als Detektordaten erfasst werden.

Die vom Dual-Energie-Detektor bereitgestellten Detektordaten können grundsätzlich ein analoges oder digitales Detektorsignal sein.

Das Röntgenspektrum wird im Wesentlichen von der verwendeten Röntgenstrahlenquelle (Röntgengenerator) in an sich bekannter Weise bestimmt. D.h., der Begriff Röntgenspektrum bezieht sich hier auf das Spektrum der von der Röntgenstrahlenquelle abgegebenen Röntgenstrahlen.

Ein Inspektionsobjekt kann mittels der quer zur Abtastrichtung, die üblicherweise einer Transportrichtung des Inspektionsobjekts durch eine Inspektionsanlage in Bezug auf die in der Inspektionsanlage angeordneten Detektorzeile entspricht, zeilenweise abgetastet werden und damit eine Vielzahl erster und zweiter Detektordaten zeilenweise erfasst werden. Im Ergebnis werden für jeden Bildpunkt eines aus den erfassten Detektordaten abzuleitenden Durchleuchtungsbilds entweder nur erste oder nur zweite Detektordaten erfasst. D.h., für jeden Bildpunkt liegt zunächst jeweils nur eine Art der für eine gemäß Dual-Energie-Technik benötigten zwei Arten von Detektordaten, nämlich Lo-Detektordaten und Hi-Detektordaten vor.

Die ersten Detektorelemente und zweiten Detektorelemente können beispielsweise jeweils Fotodioden mit einem Szintillator-Material enthalten, dass zur Einstellung der vorbestimmten Empfindlichkeit für Röntgenstrahlen des Röntgenspektrums ausgewählt und dimensioniert ist.

Die ersten Detektorelemente und die zweiten Detektorelemente können auf derselben Seite eines Substrates, z.B. in Form einer Platine, der Detektoranordnung oder auf verschiedenen Seiten des Substrats der Detektoranordnung angeordnet sein.

Wie oben bereits erwähnt, entsprechen die gemessenen Detektordaten jedes einzelnen Detektorelements zunächst einem Bildpixel eines von den Detektordaten abzuleitenden Röntgenbilds. Daher werden für jeden Bildpunkt die fehlenden, d.h. nicht gemessenen Detektordaten, mittels Interpolation berechnet.

Für Bilddarstellung basierend auf den Detektordaten wird jeder Bildpunkt entsprechend dem Ergebnis der auf der an sich bekannten Dual-Energie-Technik basierenden Materialdiskriminierung eingefärbt.

Die Helligkeit (Luminanz) jedes Bildpunkts kann aus den Hi-Detektordaten abgeleitet werden. So kann als Ergebnis ein eingefärbtes Durchleuchtungsbild, beispielsweise eine 3-Farb-Darstellung, zur Farbdarstellung der Gegenstände im Durchleuchtungsbild nach Materialklassen, bereitgestellt werden. Bei der Farbdarstellung nach Materialklassen werden die im Inspektionsobjekt enthaltenen Gegenstände abhängig von dem Material, aus dem sie überwiegend bestehen eingefärbt, sodass für einen Betrachter unmittelbar im eingefärbten Röntgenbild eine optische Zuordnung zu vorbestimmten Materialklassen erkennbar ist. Beispielsweise können metallische Gegenstände oder organische Materialen jeweils mittels unterschiedlicher Einfärbung hervorgehoben und voneinander leichter unterschieden werden.

Die Röntgeninspektionsanlage als zweiter Aspekt ist wenigstens eingerichtet für einen Transport in einer Abtastrichtung von Inspektionsobjekten durch die Röntgeninspektionsanlage zur Durchführung eines bildgebenden Inspektionsverfahren zur zerstörungsfreien Inspektion der Inspektionsobjekte und zur Bereitstellung von die Inspektionsobjekte beschreibenden Detektordaten basierend auf Erfassen von die Inspektionsobjekte durchdringenden Röntgenstrahlen mittels dem Dual-Energie-Detektor gemäß dem ersten Aspekt.

Der Erfinder hat festgestellt, dass in basierend auf den Detektordaten, die mit dem Dual-Energie-Detektor gemäß dem ersten Aspekt in der Röntgeninspektionsanlage gemäß dem zweiten Aspekt erfasst wurden, erzeugten eingefärbten Durchleuchtungsbildern u.a. folgende Bildfehler auftreten.
(a) Besonders an Kanten von Gegenständen treten in der aus den Detektordaten abgeleiteten Einfärbung nach Materialklassen Falschfarben (Falschfarbinformationen) auf.
(b) Bei kleinen Strukturen, an denen die Absorption der Röntgenstrahle zwischen hohen und niedrigen Werten wechselt, treten in der aus den Detektordaten abgeleiteten Einfärbung nach Materialklassen Falschfarben derart auf, das im Bild eine Struktur dargestellt wird, die nicht der tatsächlich im Inspektionsobjekt vorliegenden Struktur entspricht. Ein Beispiel für eine derart falsch dargestellte Struktur sind integrierte Bauelemente mit einem BGA-Gehäuse, bei dem kugelförmige Anschlüsse auf einer Montageseite zur SMD-Befestigung auf einer Platine gitterförmig angeordnet sind (BGA ist abgeleitet vom engl. Begriff Ball Grid Array).
(c) In Bereichen eines Inspektionsobjekts, in denen ein homogenes Material vorliegt, treten in der aus den Detektordaten abgeleiteten Einfärbung nach Materialklassen falsche alternierenden Hell-Dunkel-Strukturen (Luminanz-Schwankungen) auf.
(d) In der aus den Detektordaten abgeleiteten Einfärbung nach Materialklassen werden fehlerhafte Farben beobachtet, von denen der Erfinder vermutet, dass unterschiedliche Absorptionseigenschaften von Kantenpixel des Dual-Energie-Röntgendetektors die Ursache sind.

Mit dem erfindungsgemäßen Verfahren können einige der vorstehend genannten Fehler in den vermittels des Dual-Energie-Detektors gemäß dem ersten Aspekt erfassten Detektordaten abgeleiteten Farbdarstellung nach Materialklassen zumindest reduziert oder beseitigt werden können.

Es sei angemerkt, dass Merkmale und Details, die im Zusammenhang mit dem Detektordatenkorrekturverfahren definiert sind, selbstverständlich entsprechend für ein System bestehend aus der Röntgeninspektionsanlage des zweiten Aspekts mit dem Dual-Energie-(Röntgenstrahlen-)Detektor des ersten Aspekts und einer weiter unten erläuterten Verarbeitungsvorrichtung als dritter Aspekt zur Durchführung des Verfahrens und jeweils umgekehrt gelten. Daher wird hier zur Meidung von Wiederholungen bezüglich der einzelnen Aspekte wechselseitig Bezug genommen.

Zum Auffinden der her vorgeschlagenen technischen Lösung waren mehrere technische Erkenntnisse und Überlegungen erforderlich. Insbesondere wurde erkannt, dass die beobachteten Bildfehler mit im Folgenden erläuterten Besonderheiten der systematischen Nebeneinander-Anordnung von Hi-Detektorelementen und Lo-Detektorelementen in der Detektorzeile in Verbindung stehen. Die hier vorgeschlagenen Maßnahmen basieren daher im Wesentlichen auf den folgenden Erkenntnissen und technischen Überlegungen des Erfinders für die Röntgeninspektionsanlage des zweiten Aspekts mit einem Detektor des ersten Aspekts.
(a) Der Erfinder hat erkannt, dass die von zwei benachbarten Detektorelementen unter unterschiedlichen Raumwinkeln erfassten Röntgenstrahlen im abgeleiteten Röntgenbild besonders an Kanten im Inspektionsobjekt zu Falschfarbeninformationen führen.
(b) Der Erfinder hat erkannt, dass bei kleinen Strukturen im Inspektionsobjekt, bei denen die Absorption der Röntgenstrahlen zwischen hohen und niedrigen Werten wechselt, fehlerhafte Farbinformation auftreten, da entweder nur ein Lo-Detektorelement oder nur ein Hi-Detektorelement die kleine Struktur erfasst und damit insgesamt aufgrund der Interpolation auf eine falsche Struktur geschlossen wird. Beispielsweise haben sich integrierte Bauelementen mit dem o.g. BGA-Gehäuse als problematisch herausgestellt, da es passieren kann, dass entweder immer die Lo-Detektorelemente oder die Hi-Detektorelemente einen kugelförmigen Anschluss erfassen und die jeweils anderen Detektorelemente nicht, was im Ergebnis zu dem genannten Bildfehler führt.
(c) Der Erfinder hat erkannt, dass bei homogenen Materialien in einem Inspektionsobjekt, die unterschiedlichen Absorptionseigenschaften der nebeneinander angeordneten Lo- und Hi-Detektorelementen im vom Detektorsignal abgeleiteten Röntgenbild zu einer alternierenden Hell-Dunkel-Struktur (auch Helligkeits- oder Luminanz-Schwankungen) führen kann.
(d) Der Erfinder hat erkannt, dass wenn die Lo- und Hi-Detektorelemente in Fotodiodenzeilen (engl. Foto Diode Array, PDA) angeordnet sind, ein direktes Übersprechen zwischen den verschiedenen Kanälen auftreten kann. Da am Rand der Fotodiodenzeile (d.h. am Rand der Detektorzeile) entweder ein Lo- oder Hi-Detektorelement nur ein unmittelbar benachbartes Detektorelement hat, sind im Ergebnis die Absorptionseigenschaften der an den beiden Rändern der Detektorzeile befindlichen Detektorelemente unterschiedlich. Dies scheint ebenfalls zu einer fehlerhaften Einfärbung von zugehörigen Bildpunkten im vom Detektorsignal abgeleiteten Röntgenbild zu führen.

Daher wurde nach einer Lösung gesucht, um die vorstehend diskutierten Bildstörungen reduzieren oder so korrigieren zu können, dass das einer Bedienperson angezeigte nach Materialklassen eingefärbte Röntgenbild gut auswertbar ist.

Die Erfindung betrifft somit ein Verfahren zur Korrektur von Detektordaten der Röntgeninspektionsanlage gemäß dem zweiten Aspekt mit dem Dual-Energie-Röntgenstrahlendetektor gemäß dem ersten Aspekt.

Den folgenden Bildverbesserungsmaßnahmen sei vorausgeschickt:
Die Farbe eines Bildpunkts in dem aus den Detektordaten abzuleitenden eingefärbten Durchleuchtungsbild wird basierend auf der Materialdiskriminierung vermittels Bestimmung der Z-eff anhand der Hochenergie (Hi)-Detektordaten und Niedrigenergie (Lo)-Detektordaten für einen Bildpunkt abgeleitet.

Die Helligkeit (Luminanz) eines Bildpunkts wird basierend auf einer Art der Detektordaten, bevorzugt den Hi-Detektordaten, bestimmt, ebenso können aber auch die Lo-Detektordaten verwendet werden.

Die folgenden Maßnahmen können für sich allein zur Behebung einer bestimmten Störung aber auch alle zusammen eingesetzt werden. Im Prinzip können alle hier vorgeschlagenen Maßnahmen gleichzeitig oder einzeln angewandt werden. Jede der Bild verbessernden Maßnahme wurde als selbstjustierend erkannt, da jede Maßnahme "quasi" sich nur wesentlich an ihrem Bestimmungsort des Bildes auswirkt und an anderen Stellen zu keiner signifikanten Änderung (Störungen) führt.

Es wird hier vorgeschlagen die von der Inspektionsanlage gemäß dem zweiten Aspekt mit dem Dual-Energie-(Röntgenstrahlen-)Detektor des ersten Aspekts bereitgestellten Detektordaten mit einem Verfahren zu korrigieren, wobei das Verfahren die folgenden Schritte aufweist:
Mit einem ersten Schritt (a1) des Verfahrens werden zunächst fehlende zweite Detektordaten für den Ort eines ersten Detektorelements abgeleitet. Dazu wird zunächst ein Interpolationswert aus gemessenen zweiten Detektordaten von zu diesem ersten Detektorelement benachbarten zweiten Detektorelementen bestimmt. Dann wird ein Korrekturwert basierend auf mit diesem ersten Detektorelement gemessenen ersten Detektordaten und benachbarter gemessener erster Detektordaten bestimmt. Abschließend wird der zuerst bestimmte Interpolationswert mit diesem Korrekturwert korrigiert.

Das Bestimmen des Korrekturwerts im Schritt (a1) kann aufweisen: Bilden der Differenz aus dem n-fachen der mit dem ersten Detektorelement gemessenen Detektordaten und der Summe von n in der Detektorzeile benachbarten gemessenen ersten Detektordaten, wobei n eine ganze, gerade Zahl mit n>=2 ist

Zusätzlich werden mit einem zweiten Schritt (a2) des Verfahrens fehlende erste Detektordaten für den Ort eines zweiten Detektorelements abgeleitet. Dazu wird zunächst ein Interpolationswert aus gemessenen ersten Detektordaten von zu diesem zweiten Detektorelement benachbarten ersten Detektorelementen bestimmt. Dann wird ein Korrekturwert basierend auf mit diesem zweiten Detektorelement gemessenen zweiten Detektordaten und benachbarter gemessener zweiten Detektordaten bestimmt. Abschließend wird der zuerst bestimmte Interpolationswerts mit dem Korrekturwert korrigiert.

Das Bestimmen des Korrekturwerts im Schritt (a2) kann aufweisen: Bilden der Differenz aus dem n-fachen der mit dem zweiten Detektorelement gemessenen Detektordaten und der Summe von n in der Detektorzeile benachbarten gemessenen zweiten Detektordaten, wobei n eine ganze, gerade Zahl mit n>=2 ist.

Die vorstehende Maßnahme ist eine modifizierte Interpolation zur Bestimmung der an einem Detektorort jeweils fehlenden Detektordaten, die im Ergebnis zu einer verbesserten Güte der Materialdiskriminierung führt. Mit dieser Maßnahme werden Bildstörungen durch Falschfarben an Kanten im Inspektionsobjekt und Falschfarben in Bereichen mit feinen Strukturen eines Inspektionsobjekts, die aufgrund der speziellen Struktur des Dual-Energie-Detektors des ersten Aspektes auftreten können, vermieden. Insbesondere hat sich herausgestellt, dass diese Maßnahme bei einem homogenen Material zu keinen signifikanten Änderungen führt. In Bereichen mit hochfrequenten Strukturänderungen werde Falschfarben aufgrund der Fehlabtastung mit den ersten oder zweiten Detektorelementen vermieden oder zumindest reduziert.

Der Korrekturwert kann beispielsweise ein Korrekturfaktor sein. Das Korrigieren des Interpolationswerts mit dem Korrekturwert kann dann als Multiplizieren des Interpolationswerts mit dem Korrekturfaktor durchgeführt werden.

Das Bestimmen des Korrekturfaktors in Schritt (a1) kann aufweisen: Bilden der Differenz aus 1 und einem Quotienten aus einer Differenz der beiden in der Detektorzeile linksseitig und rechtsseitig benachbart gemessenen zweiten Detektordaten und der Summe der beiden in der Detektorzeile linksseitig und rechtsseitig benachbart gemessenen zweiten Detektordaten. Entsprechend kann das Bestimmen des Korrekturfaktors in Schritt (a2) aufweist: Bilden der Differenz aus 1 und einem Quotienten aus einer Differenz der beiden in der Detektorzeile linksseitig und rechtsseitig benachbart gemessenen ersten Detektordaten und der Summe der beiden in der Detektorzeile linksseitig und rechtsseitig benachbart gemessenen ersten Detektordaten.

Eine weitere Maßnahme der Erfindung hat die Korrektur von Helligkeits- oder Hell-Dunkel-Schwankungen zum Gegenstand. Für die Bestimmung der Helligkeit (Luminanz) der Bildpunkte des finalen Durchleuchtungsbildes wird normalerweise für alle Bildpunkte einheitlich nur eine Art der Detektordaten, d.h. entweder nur die Hi-Detektordaten oder nur die Lo-Detektordaten, verwendet. Da bei der vereinfachten Detektorzeile des ersten Aspektes für jeden zweiten Bildpunkt die somit benötigten Detektordaten zur Bestimmung der Helligkeit des Bildpunkts als Messdaten fehlen, basiert die Helligkeitsinformation aller Bildpunkte zunächst zur Hälfte auf interpolierten Detektordaten (also durch Berechnung bestimmten Detektordaten im Vergleich zu gemessenen Detektordaten).

Die hier folgende weitere Maßnahme beabsichtigt die Verbesserung des basierend auf (durch Berechnung) bestimmten Detektordaten eines Bildpunkts zugeordneten Helligkeitswerts. Dazu werden die folgenden Schritte vorgeschlagen:
(b1) Bestimmung von Materialwerten für alle Bildpunkte basierend auf den für jeden Bildpunkt tatsächlich gemessenen Detektordaten und den für jeden Bildpunkt (durch Berechnung) bestimmten Detektordaten. Die den Bildpunkten zugeordneten Materialwerte definieren eine Materialinformationsmatrix, indem in der Materialinformationsmatrix für jeden einem Detektorelement entsprechenden Bildpunkt ein Z-effektiv-Wert als Materialwert gespeichert wird.
(b2) Filterung der für alle Bildpunkte bestimmten Materialwerte in der Materialinformationsmatrix mittels einer Mittelwert-basierenden oder Median-basierenden Filteroperation, die jeweils um einen Bildpunkt herum NxN Materialwerte erfasst, wobei N eine ganze Zahl größer 3 ist, wobei bevorzugt N=5 gilt. "Mittelwert-basierenden" oder "Median-basierenden" soll hier bedeuten, dass das Ergebnis zusätzlich mit einem Faktor gewichtet oder einem Offset justiert werden kann.
(b3) Bestimmen an jedem Bildpunkt, an dem erste Detektordaten gemessen wurden, anhand des für diesen Bildpunkt bestimmten Materialwerts von zu diesem Bildpunkt zugehörigen theoretischen zweiten Detektordaten. "Theoretische Detektordaten" bedeutet hier, dass bei der Dual-Energie-Technik, bei bekannter Z-eff eines durchstrahlten Materials und Kenntnis einer Art von Detektordaten, nämlich den Hi- oder den Lo-Detektordaten, die jeweils nicht bekannten Detektordaten theoretisch bestimmt werden können.
(b4) Bestimmen für alle Bildpunkte eines jeweiligen Helligkeitswerts basierend auf den für den jeweiligen Bildpunkte vorliegenden gemessenen zweiten Detektordaten oder den theoretischen zweiten Detektordaten.

Bevorzugt sind die zweiten Detektordaten Hi-Detektordaten. Mit dieser Maßnahme können Luminanz-Störungen, insbesondere Luminanz-Schwankungen, korrigiert werden. D.h., mittels der vorherigen (weiter oben besprochenen) Maßnahmen kann die Materialdiskriminierung verbessert werden, auf der die Einfärbung des finalen Durchleuchtungsbildes basiert. Der Erfinder hat erkannt, dass die so bestimmten Materialwerte, wie vorstehend beschrieben, verwendet werden können, um theoretische Hi-Detektordaten zu bestimmen, die dann die Luminanz des betreffenden Bildpunkts festlegen.

Wie bereits erwähnt, kann diese Maßnahme zur Luminanz-Korrektur grundsätzlich auch basierend auf Lo-Detektordaten als zweite Detektordaten verwendet werden kann. Da bei bekanntem Materialwert für einen Bildpunkt die für diesen Ort interpolierten und die für diesen Ort gemessenen Detektordaten über einen Faktor zusammenhängen, können grundsätzlich für die bevorzugt auf Hi-Detektordaten basierende Luminanz-Korrektur auch Lo-Detektordaten verwendet werden.

Mit der vorstehenden Maßnahme können besonders Hell-Dunkel-Schwankungen in solchen Bildbereichen, in denen das Inspektionsobjekt tatsächlich ein homogenes Material aufweist und daher im Durchleuchtungsbild gleichmäßig hell sein sollte, vermieden werden.

Ein vierter Aspekt betrifft eine Verarbeitungsvorrichtung zur Korrektur von Detektordaten, wobei die Verarbeitungsvorrichtung eine Computereinheit aufweist, die zur Durchführung eines Verfahrens gemäß dem dritten Aspekt eingerichtet ist.

Ein fünfter Aspekt betrifft ein System aus der Röntgeninspektionsanlage des zweiten Aspekts, die eingerichtet ist, die erfassten Detektordaten an eine Verarbeitungsvorrichtung gemäß dem vierten Aspekt weiterzuleiten. Dazu kann die Röntgeninspektionsanlage für eine Datenkommunikation mit der Verarbeitungsvorrichtung, beispielsweise leitungsgebunden oder drahtlos, verbunden sein.

Ein sechster Aspekt betrifft ein Computerprogrammprodukt mit einem Computerprogramm, das Softwaremittel zur Durchführung eines Verfahrens gemäß dem dritten Aspekt aufweist, wenn das Computerprogramm auf einem Computer, insbesondere auf einer Verarbeitungsvorrichtung gemäß dem vierten Aspekt ausgeführt wird.

Ein siebter Aspekt betrifft einen Datenträger, der ein Computerprogrammprodukt gemäß dem dritten Aspekt enthält.

Ein achter Aspekt betrifft einen Datenstrom mit elektronisch lesbaren Steuersignalen, die mit einem programmierbaren Computer, insbesondere einer Verarbeitungsvorrichtung gemäß dem vierten Aspekt, derart interagieren können, dass wenn der Computer die elektronisch lesbaren Steuersignale ausführt, der Computer ein Verfahren gemäße dem dritten Aspekt durchführt.

### Kurze Beschreibung der Zeichnungsfiguren

Weitere Vorteile, Merkmale und Einzelheiten der her vorgeschlagenen Lösung(en) ergeben sich aus der nachfolgenden Beschreibung, in der unter Bezugnahme auf Zeichnungen Ausführungsbeispiele im Einzelnen beschrieben sind. Dabei können die in den Ansprüchen und in der Beschreibung erwähnten Merkmale jeweils einzeln für sich oder in beliebiger Kombination wesentlich sein. Ebenso können die vorstehend genannten und die hier weiter ausführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung oder normal lesbaren Bezugszeichen. Die gezeigten und beschriebenen Ausführungsformen sind nicht als abschließend zu verstehen, sondern haben beispielhaften Charakter zur Erläuterung der hier vorgeschlagenen Lösung. Die detaillierte Beschreibung dient der Information des Fachmanns, daher werden bei der Beschreibung bekannte Strukturen und Verfahren nicht im Detail gezeigt oder erläutert, um das Verständnis der Beschreibung nicht zu erschweren.
- Figur 1: zeigt eine Querschnittansicht eines Detektors des Standes der Technik mit einer Zeile mit ersten Detektorelementen und einer Zeile mit zweiten Detektorelementen, wobei die Zeilen in Abtastrichtung hintereinander angeordnet sind.
- Figur 2: zeigt einen Querschnitt durch eine neuartige Detektorzeile, wobei in der Detektorzeile Lo-Detektorelementen und Hi-Detektorelementen abwechselnd nebeneinander angeordnet sind.
- Figur 3A: veranschaulicht die Matrixstruktur erfasster Detektordaten, die mittels der Detektorzeile der Figur 2 durch zeilenweises Abtasten eines mit Röntgenstrahlen durchleuchteten Inspektionsobjekts, erfasst wurden.
- Figur 3B: veranschaulicht, dass aus den erfassten Detektordaten der Matrixstruktur der Figur 3a, eine Matrix enthaltend erfasste und berechnete Detektordaten für jeden Bildpunkt berechnet wird.
- Figur 4: zeigt zur Veranschaulichung ein Beispiel einer Röntgeninspektionsanlage mit einem Detektor mit einer Detektorzeile der Figur 2 in einer seitlichen Querschnittsdarstellung.
- Figur 5: veranschaulicht die Bestimmung fehlender Detektordaten für die Detektorzeile der Figur 2 bei einem Gegenstand mit einer homogenen Materialverteilung.
- Figur 6: veranschaulicht Interpolationsfehler bei der Bestimmung fehlender Detektordaten für die Detektorzeile der Figur 2 bei einem Gegenstand mit kleinräumigen Schwankungen bei der Materialverteilung.
- Figur 7: veranschaulicht Interpolationsfehler bei der Bestimmung fehlender Detektordaten für die Detektorzeile der Figur 2 an der Kante eines Gegenstands, die einen Sprung in der Materialverteilung bedeutet.
- Figur 8: veranschaulicht eine Maßnahme zur Luminanz-Korrektur, vermittels der kleinste Strukturen im Inspektionsobjekt erhalten bleiben.

### Detaillierte Beschreibung von Ausführungsbeispielen

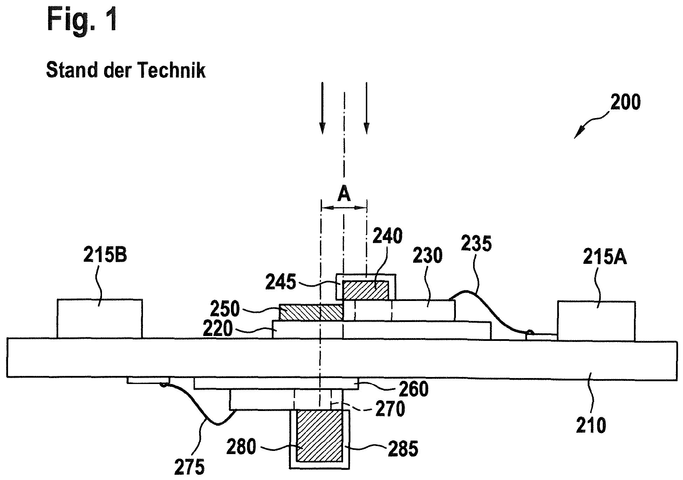

Figur 1 zeigt die Querschnittansicht des einleitend diskutierten Dual-Energie-Detektors 200 des Standes der Technik, der aus der EP 1 010 021 B1 bekannt ist.

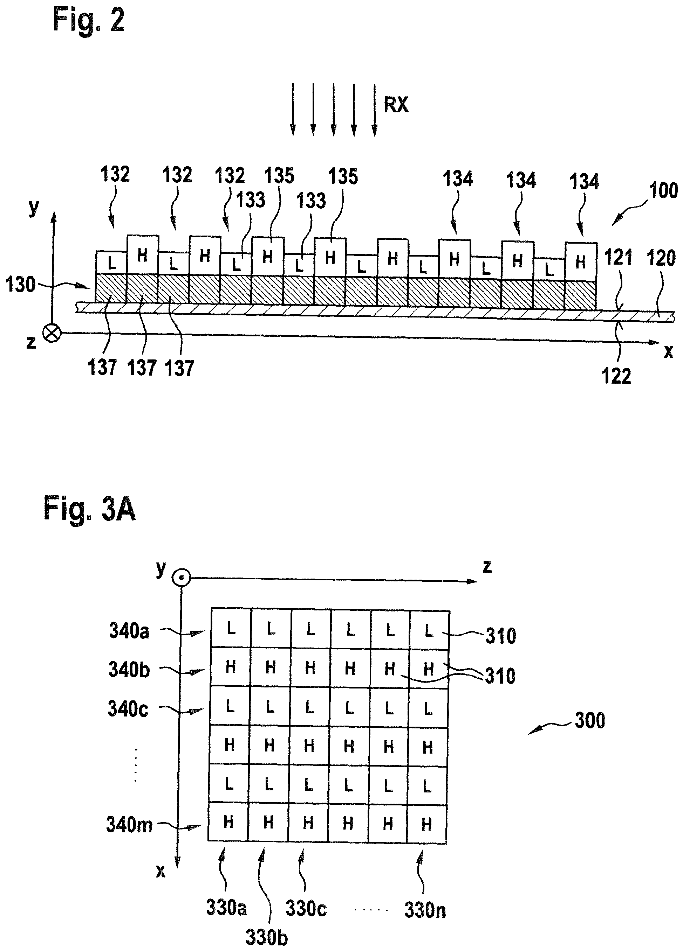

Figur 2 zeigt in einer stark vereinfachten Darstellung einen Querschnitt durch eine Detektorzeile 130 eines hier vorgeschlagenen Dual-Energie-Röntgendetektors 100 gemäß einem Ausführungsbeispiel. In der Detektorzeile 130 sind Niedrigenergie (Lo)-Detektorelemente 132 und Hochenergie (Hi)-Detektorelemente 134 abwechselnd nebeneinander angeordnet.

Die Detektorzeile 130 besteht im Wesentlichen aus einer Fotodiodenzeile (photo diode array, PDA) mit Fotodioden 137, die auf einer Trägerplatine 120 als Substrat angeordnet sind. Die Fotodioden 137 sind in der Detektorzeile 130 jeweils abwechselnd mit einem zugeordneten Szintillator 133 oder 135 versehen.

Durch Einsatz spezieller Materialien in den Szintillatoren 133, 135 und/oder Dimensionierung der Schichtdicke (in y-Richtung) der jeweiligen Szintillatoren 133, 135 implementiert das Ansprechverhalten der jeweiligen Fotodiode 137 ein Lo-Detektorelement 132 oder ein Hi-Detektorelement 134.

Beispielsweise kann in einer Implementierung die Dimension eines Detektorelements 0,8 mm (in z-Richtung) mal 0,8 mm (in Zeilenrichtung, d.h. x-Richtung) sein. Eine typische Detektorzeile kann insgesamt in Zeilenrichtung (x-Richtung) 80 mm betragen, sodass die Zeile ungefähr aus 1.000 Detektorelementen besteht. Grundsätzlich sind die Maße der Detektorelemente und die Länge der Detektorzeile frei wählbar.

Beispielsweise, wie in der Figur 2 vereinfacht (und daher übertrieben, d.h. nicht maßstabsgerecht) dargestellt, haben die Lo-Detektorelemente 132 einen Szintillator 133 aus einem speziellen Szintillator-Material L mit einer ersten Schichtdicke (die sich in Einfallrichtung für die Röntgenstrahlen, d.h. in y-Richtung bestimmt). Die Hi-Detektorelemente 134 haben einen Szintillator 135 aus einem anderen speziellen Szintillator-Material H mit einer zweiten Schichtdicke. Wie in der Figur 2 dargestellt ist die erste Schichtdicke kleiner als die zweite Schichtdicke.

Es sei angemerkt, dass die Szintillator-Materialien L und H grundsätzlich auch gleich sein können, wobei das Ansprechverhalten dann ausschließlich durch die Schichtdicke bestimmt wird. Ebenfalls ist es möglich, dass die Schichtdicken der Hi- und Lo-Detektorelemente 132, 134 gleich ist, wobei das Ansprechverhalten dann ausschließlich durch die unterschiedlich gewählten Szintillator-Materialien L und H bestimmt wird.

Beispielsweise kann als Szintillator-Material YAG (Yttrium Aluminium Granat), YGAG (Yttrium-Gadolinium-Aluminium-Granat), GOS (Gadoliniumoxysulfid) oder physikalisch mit Röntgenstrahlung ähnlich wirkende Materialien verwendet werden.

Für den Lo-Szintillator werden bevorzugt erste Schichtdicken in der Größenordnung kleiner 1 mm (z.B. 0,45 mm) und für den Hi-Szintillator werden bevorzugt zweite Schichtdicken in der Größenordnung größer 1 mm (z.B. 1,4mm) eingestellt.

Bei der in der Figur 2 gezeigten Detektorzeile sind alle Detektorelemente 132, 134 auf derselben Seite, nämlich der Oberseite 121 der Trägerplatine 120 angeordnet. Es sei angemerkt, dass (in einer nicht gezeigten Variante) die Lo-Detektorelemente 132 auf der Oberseite 121 der Trägerplatine 120 angeordnet sein können, während sich die Hi-Detektorelemente 134 auf der Unterseite 122 der Trägerplatine 120 befinden, oder umgekehrt.

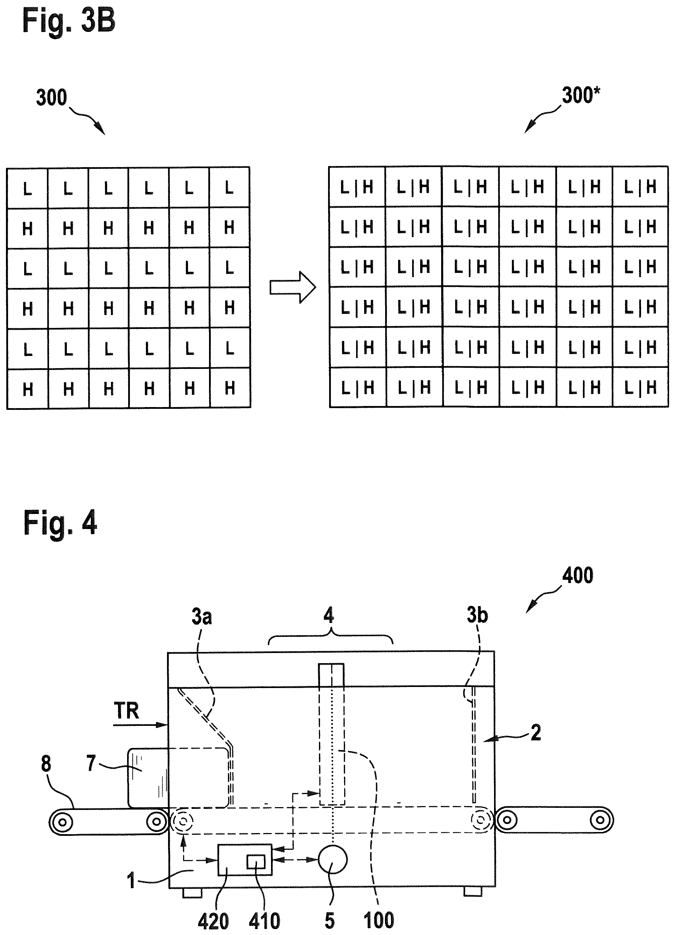

Zur Orientierung und Bezugnahme ist in der Figur 2 ein Koordinatensystem angetragen, gemäß dem die Längsrichtung der Detektorzeile 130 in die x-Richtung verläuft, die Richtung von auf die Detektorelemente 132, 134 einfallenden zu erfassenden Röntgenstrahlen RX (vereinfacht als Pfeilbündel dargestellt) in y-Richtung verläuft und die Abtastrichtung der Detektorzeile in z-Richtung verläuft. Die Abtastrichtung entspricht der Transportrichtung TR von Inspektionsobjekten durch die in der Figur 4 als Beispiel gezeigten Röntgeninspektionsanlage 1. Wesentlich in diesem Zusammenhang ist, dass die Längsrichtung (x-Richtung) der hier vorgeschlagene Detektorzeile 130 quer zur Abtastrichtung (z-Richtung) angeordnet ist.

Figur 3A veranschaulicht eine Matrixstruktur erfasster Detektordaten, die mittels der Detektorzeile 130 der Figur 2 durch zeilenweises Abtasten eines mit Röntgenstrahlen durchleuchteten Inspektionsobjekts erfasst wurden.

In der Figur 3A ist ebenfalls zur Orientierung und Bezugnahme das Koordinatensystem der Figur 2 angezeichnet. Demzufolge erzeugt die Detektorzeile 130 beim zeilenweisen Abtasten die Detektordatenmatrix 300.

Die Detektordatenmatrix 300 setzt sich aus Zeilen 330a, 330b, 330c, ..., 330n in z-Richtung zusammen. Aufgrund der sich abwechselnden Anordnung der Lo- und Hi-Detektorelemente 132, 134 zeigt die Detektordatenmatrix 300 Spalten 340a, 340b, 340c, ..., 340m, die jeweils nur aus gemessene Lo-Detektordaten oder Hi-Detektordaten bestehen. D.h., wie bereits erläutert, wurde die Vereinfachung im Aufbau der Detektorzeile 130 mit Bezug auf jeweils eine Art Detektorelement mit einer Unterabtastung "erkauft". Diese Unterabtastung kann aber durch Rekonstruktion, beispielsweise durch Interpolation, der jeweils an einem Bildpunkt fehlenden Art von Detektordaten kompensiert werden.

Figur 3B veranschaulicht, dass aus der erfassten Detektordatenmatrix der Figur 3A, eine vollständige Detektordatenmatrix abgeleitet wird, in der für jeden Bildpunkt erfasste (gemessene) und (durch Berechnung) bestimmte Detektordaten vorliegen. Beispielsweise kann die jeweils fehlende Art von Detektordaten für einen Bildpunkt mittels Interpolation der beiden benachbarten gemessenen Detektordaten berechnet und somit bestimmt werden.

Figur 4 zeigt zur Veranschaulichung ein Beispiel einer Röntgeninspektionsanlage 1 mit einem Detektor 100 mit einer Detektorzeile 130 der Figur 2 in einer seitlichen Querschnittsdarstellung. Die Röntgeninspektionsanlage 1 weist Strahlenschutzvorhäng 3a, 3b auf, von denen je einer an einem Eingang und einem Ausgang eines Strahlentunnels 2 der Röntgeninspektionsanlage 1 angeordnet ist. Zwischen den Strahlenschutzvorhängen 3a, 3b befindet sich innerhalb des Strahlentunnels 2 ein Strahlungsbereich 4, in dem wenigstens eine Strahlenquelle 5 (z.B. Röntgenröhre mit Kollimator) und der darauf ausgerichtete Detektor 100 angeordnet ist. Zum Transport eines Gepäckstückes 7 als Inspektionsobjekt in Transportrichtung TR durch den Strahlentunnel 2 dienen eine Transporteinrichtung 8, beispielsweise ein Gleitgurtförderer, der die Inspektionsobjekte 7 in der Transportrichtung TR durch den Strahlungsbereich 4 fordert. Der Detektor 100 und damit auch die Detektorzeile 130 ist L-förmig und mit der Längsrichtung quer zur Transportrichtung TR angeordnet, sodass die Transportrichtung TR der Abtastrichtung der Inspektionsobjekte 7 entspricht.

Figur 4 ist außerdem ein stark vereinfachtes Blockdiagram eines Systems 400, das im Wesentlichen besteht aus der Röntgeninspektionsanlage 1 und einer Verarbeitungsvorrichtung 410, die eingerichtet ist, für die Durchführung der hier vorgeschlagenen Verfahren zur Korrektur von Detektordaten, die mit einer Röntgeninspektionsanlage, beispielsweise der Röntgeninspektionsanlage 1 der Figur 4, die mit einem Dual-Energie-Detektor, beispielsweise dem Dual-Energie-Detektor 100 der Figur 2, ausgerüstet ist, erzeugt wurden.

Die Verarbeitungsvorrichtung 410 kann, wie in der Figur 4 veranschaulicht, Teil einer Steuereinrichtung 420 der Röntgeninspektionsanlage 1 sein. Die korrigierten oder kompensierten Detektordaten können in der Steuereinrichtung 420 oder einer damit verbundenen separaten Bildverarbeitungseinrichtung verwendet werden, um das gewünschte basierend auf Materialklassen eingefärbte Durchleuchtungsbild zu erzeugen, dass einer Bedienperson auf einem Bildschirm (nicht dargestellt) in an sich bekannter Weise angezeigt wird. Die Verarbeitungsvorrichtung 410 kann sich grundsätzlich auch völlig getrennt zur Röntgeninspektionsanlage befinden, beispielsweise an einem zentralen Ort, an dem die Rohdetektordaten mehrerer Inspektionsanlagen zusammenlaufen und dort zentral verarbeitet werden. Dies macht für die Wirksamkeit der hier vorgeschlagenen Korrekturmaßnahmen jedoch keinen Unterschied.

Beispielsweise kann die Verarbeitungseinheit 410 auch Teil der Dual-Energie-Detektoreinheit 100 sein, sodass die von der Detektoreinheit 100 erzeugten Daten sofort am Detektor gemäß den hier vorgeschlagenen Maßnahmen verbessert werden. Damit könnte der hier vorgeschlagene Dual-Energie-Detektoreinheit 100 grundsätzlich kompatibel zu bestehenden Röntgeninspektionsanlage mit herkömmlichen aufwändigeren Detektoreinheiten gemacht werden. Im Ergebnis können bei im Übrigen baugleichen Röntgeninspektionsanlagen durch die hier vorgeschlagene Dual-Energie-Detektoreinheit 100 in Verbindung mit den Verbesserungsmaßnahmen für die Detektordaten die Systemkosten bei ähnlich hoher Bildqualität gesenkt werden.

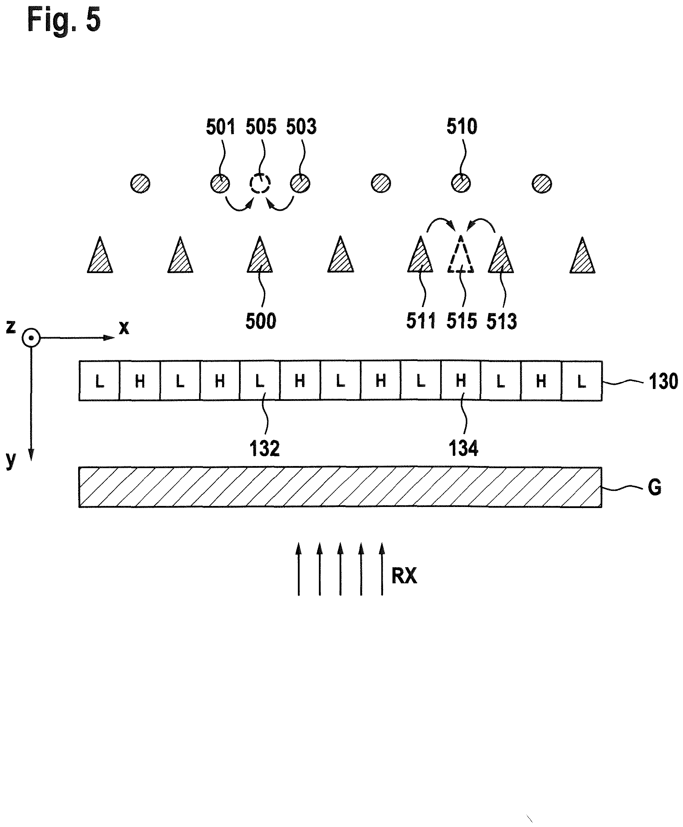

Der Diskussion der in den Figuren 5-9 veranschaulichten Rekonstruktionsmaßnahmen von am Ort eines Detektorelements fehlenden Detektordaten sei eine Erläuterung der verwendeten Symbole vorausgeschickt.

In jeder der Figuren 5-9 ist die Detektorzeile 130, wie im Zusammenhang mit der Figur 2 erläutert, dargestellt. Zur vereinfachten Darstellung sind die sich abwechselnden Lo-Detektorelemente mit L und die Hi-Detektorelemente mit H gekennzeichnet. In jeder Figur sind die von einer Röntgenstrahlenquelle einfallenden Röntgenstrahlen RX symbolisch mit einem Pfeilbündel angedeutet, wobei die Röntgenstrahlen RX in den Figuren von unten nach oben verlaufen und dabei jeweils einen Testgegenstand oder Freiraum durchlaufen und dann auf die Detektorzeile 130 treffen, von deren Detektorelementen 132, 134 jeweils für einen Bildpunkt Lo-Detektordaten oder Hi-Detektordaten erfasst werden.

Die Detektordaten sind mittels jeweiliger Symbole dargestellt. Hi-Detektordaten sind Dreiecke und Lo-Detektordaten sind Kreise. Bei den jeweils von einem Detektorelement erfassten Detektordaten, d.h. tatsächlich mit dem jeweiligen Detektor gemessenen Detektordaten ist das Symbol ein ausgefülltes Symbol. Eine für einen bestimmten Detektor rekonstruierte Art von Detektordaten ist mit dem entsprechenden Symbol mit gestricheltem Rand dargestellt. Wenn durch Interpolation berechnete Detektordaten den tatsächlichen Begebenheiten nicht korrekt entsprechen sind entsprechend korrigierte Detektordaten mit dem zugehörigen Symbol, dessen Fläche schraffiert ist, dargestellt. Zusätzlich zeigt ein Pfeil die Richtung an, in die der nicht passende Interpolationswert korrigiert werden sollte.

Figur 5 veranschaulicht zunächst die Bestimmung fehlender Detektordaten für die Detektorzeile 130 der Figur 2 bei einem Gegenstand G mit einer homogenen Materialverteilung.

Den Rahmenbedingungen entsprechend sind alle tatsächlich gemessenen Lo-Detektordaten (Dreiecke) gleich sowie alle tatsächlich gemessenen Hi-Detektordaten (Kreise) gleich. Folglich führt eine Interpolation von der Fehlstelle benachbarten tatsächlich gemessenen Detektordaten zu einem Interpolationswert, der den physikalischen Rahmenbedingungen entspricht. Die so berechneten Interpolationswerte für die Detektordatenmatrix 300 (Figur 3B) sind für die Materialdiskriminierung gemäß Dual-Energie-Technik geeignet und führen nicht zu einer falschen Einfärbung von Bildpunkten.

In der Figur 5 sind zwei Beispiele für eine Rekonstruktion fehlender Detektordaten dargestellt. Im linken Bereich der Figur 5 hat das Detektorelement 132 als Lo-Detektorelement die Lo-Detektordaten 500 erfasst. Die nicht gemessenen Hi-Detektordaten werden durch Interpolation der unmittelbar benachbarten gemessenen Hi-Detektordaten 501 und 503 berechnet. Dies führt, da die Hi-Detektordaten 501 und 503 gleich groß sind, zu dem ebenso großen Interpolationswert 505. Im rechten Bereich der Figur 5 hat das Detektorelement 134 als Hi-Detektorelement die Hi-Detektordaten 510 erfasst. Die nicht gemessenen Lo-Detektordaten werden durch Interpolation der unmittelbar benachbarten gemessenen Lo-Detektordaten 511 und 513 berechnet. Dies führt, da die Lo-Detektordaten 511 und 513 gleich groß sind, zu dem ebenso großen Interpolationswert 515. Wie oben bereits erwähnt, führt die Situation der Figure 5 zu keinen Falschfarben im abgeleiteten nach Materialklassen eingefärbten Durchleuchtungsbild.

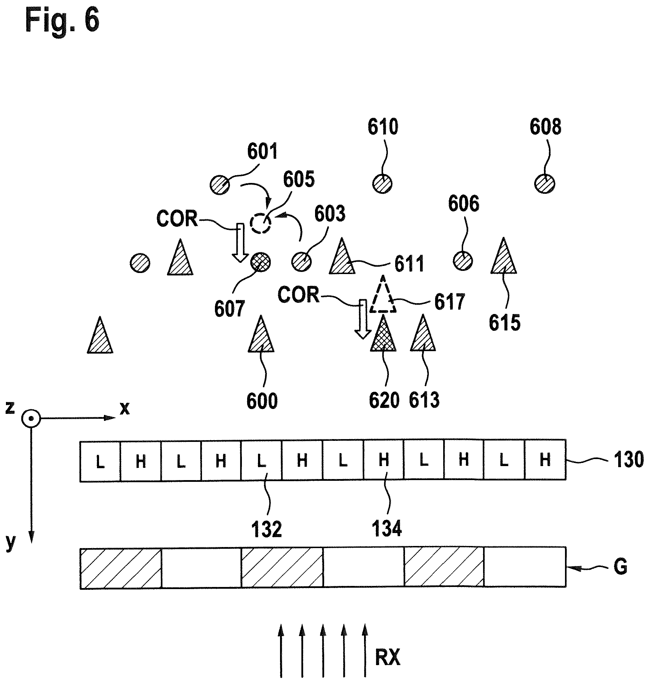

Figur 6 veranschaulicht Interpolationsfehler bei der Bestimmung fehlender Detektordaten für die Detektorzeile 130 der Figur 2 bei einem Gegenstand G mit kleinräumigen Schwankungen bei der Materialverteilung.

Die physikalischen Rahmenbedingungen in der Figur 6 unterscheiden sich im Wesentlichen dadurch, dass die kleinräumigen Schwankungen bei den Materialeigenschaften des Inspektionsgegenstands dazu führen, dass die Interpolation benachbarter tatsächlich gemessener Detektordaten die fehlenden Detektordaten nicht korrekt rekonstruieren kann.

In der Figur 6 sind ein Beispiel für eine solche fehlerbehaftete Rekonstruktion fehlender Detektordaten dargestellt. Im linken Bereich der Figur 6 hat das Detektorelement 132 als Lo-Detektorelement die Lo-Detektordaten 600 erfasst. Die nicht gemessenen Hi-Detektordaten sollen wieder durch Interpolation der unmittelbar benachbarten gemessenen Hi-Detektordaten 601 und 603 berechnet werden. Dies führt, da die Hi-Detektordaten 601 und 603 unterschiedlich sind, aufgrund der Interpolation zu einem Mittelwert der beiden den fehlenden Hi-Detektordaten benachbarten Hi-Detektordaten 601 und 603. Der so erhaltene Interpolationswert 605 ist deutlich zu hoch. Der Sollwert 607 für eine korrekte Rekonstruktion ist ebenfalls angetragen und entspricht aufgrund der Rahmenbedingungen den Detektordaten 603. Der Pfeil COR deutet die Richtung an, in die eine Korrektur- oder Kompensationsmaßnahme den Interpolationswert korrigieren müsste; idealerweise auf den Wert der Detektordaten 603.

Die Situation der Figure 6 führt daher zu Erzeugung von Falschfarben im abgeleiteten nach Materialklassen eingefärbten Durchleuchtungsbild.

Als Korrekturmaßnahme wird hier im Prinzip vorgeschlagen, zunächst fehlende Detektordaten einer Art mittels Interpolation aus n in der Detektorzeile am nächsten liegenden Detektordaten derselben Art zu berechnen, wobei n eine gerade Zahl größer gleich 2 ist, also n = 2, 4, 6, .... Dieser Interpolationswert wird anschließend mit einem geeigneten Korrekturwert korrigiert.

Zur Bestimmung des Korrekturwert hat sich folgender Ansatz bewährt. Die an der Interpolationsstelle tatsächlich gemessenen Detektordaten der anderen Art (d.h. des komplementären Energiebereichs) werden mit ihren Umgebungswerten verglichen und darauf basierend eine Korrektur des Interpolationswerts in die richtige Richtung COR durchzuführen. Je inhomogener und je weiter weg vom Mittelwert der Umgebung die Werte liegen, umso größer sollte der Korrekturwert sein.

Es hat sich bewährt, den Korrekturwert zu berechnen als das n-Fache der an der Interpolationsstelle tatsächlich gemessene Detektordaten (d.h. der komplementären/anderen Art) abzüglich der n der Interpolationsstelle in der Detektorzeile am nächsten liegenden tatsächlich gemessenen komplementären Detektordaten.

Dazu ist in der Figur 6 im rechten Teil ein Beispiel illustriert. An der Stelle des Hi-Detektorelements 134 wurden die Hi-Detektordaten 610 gemessen. Die an dieser Stelle fehlenden komplementäre Lo-Detektordaten werden gemäß der vorstehend vorgeschlagenen Strategie beispielsweise mit n=4 wie folgt berechnet.

Zunächst ein Interpolationswert 617 basierend auf den n=4 in der Detektorzeile 130 am nächsten liegenden gemessenen Lo-Detektordaten 600, 611, 613, 615 berechnet. Der Korrekturwert wird als Differenz aus dem 4-Fachen der vom Hi-Detektorelement 134 gemessenen Hi-Detektordaten 610 und den n=4 in der Detektorzeile 130 am nächsten liegenden Hi-Detektordaten 601, 603, 606, 608 berechnet. Mit dem so erhaltenen Korrekturwert wird der Interpolationswert 617 korrigiert, um den richtigen zu rekonstruierenden Lo-Detektordaten 620 möglichst nahe zu kommen.

In der Wirkung leistet die Maßnahme mit der Interpolation eine Reduktion der Kantenverfärbung. Die feinen Strukturen im durchleuchteten Gegenstand verursachen eine Art Schwebung in der Farbdarstellung, deren Auswirkung durch die Beimischung der Gradienten-Terme oder Differenz-Terme benachbarter gemessener Detektordaten reduzieren werden kann.

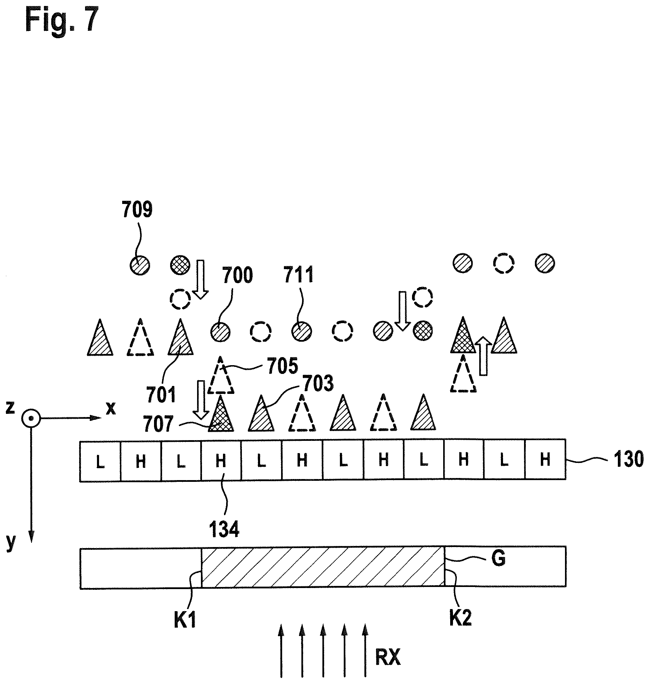

Figur 7 veranschaulicht Interpolationsfehler bei der Bestimmung fehlender Detektordaten für die Detektorzeile 130 der Figur 2 an der Kante eines Gegenstands, die einen Sprung in der Materialverteilung bedeutet.

Wie bereits in der Figur 6 produziert die Interpolation an Kanten von Gegenständen Falschfarben im abgeleiteten nach Materialklassen eingefärbten Durchleuchtungsbild, da verfälschte Detektordaten die Materialdiskriminierung der Dual-Energie-Technik beeinflusst.

Ein weiterer Korrekturansatz, der sich an Kanten bewährt hat besteht darin, zunächst an einer Stelle mit einem Detektorelement einer Art (Hi oder Lo), zunächst basierend auf n am nächsten liegenden gemessenen Detektordaten derselben Art in der Detektorzeile einen Interpolationswert an der interessierenden Stelle (Fehlstelle) zu bestimmen.

Beispielsweise wurde in der Figur 7 an der Stelle des Hi-Detektorelements 134 der Detektoreile 130 der Interpolationswert 705 der fehlenden Lo-Detektordaten basierend auf den n=2 nächsten benachbarten tatsächlich gemessenen Lo-Detektordaten 701, 703 berechnet; n soll grundsätzlich eine gerade Zahl größer gleich 2 sein. Dieser erste berechnete Interpolationswert 705 ist nicht korrekt. Wie an den physikalischen Randbedingungen der Figur 6 nachvollziehbar ist, ist der Interpolationswert 705 zu groß.

Daher wird hier basierend auf empirischen Versuchen vorgeschlagen, den Interpolationswert 705 mit einem Korrekturwert, der als Korrekturfaktor verwendet wird, zu korrigieren. Es wurde gefunden, dass ein Korrekturfaktor gut funktioniert, der sich bestimmt als: Differenz von 1 und dem Quotienten aus der Differenz von k in der Detektorzeile 130 am nächsten liegenden, komplementären, tatsächlich gemessenen Hi-Detektordaten 709, 711 und der Summe der k in der Detektorzeile 130 am nächsten liegenden, komplementären, tatsächlich gemessenen Hi-Detektordaten 709, 711. Diese relativ einfache Rechenvorschrift erreicht sehr gut, Interpolationsfehler an Kanten auszugleichen und so die ohne Korrektur auftretenden Farbverfälschungen zu vermeiden.

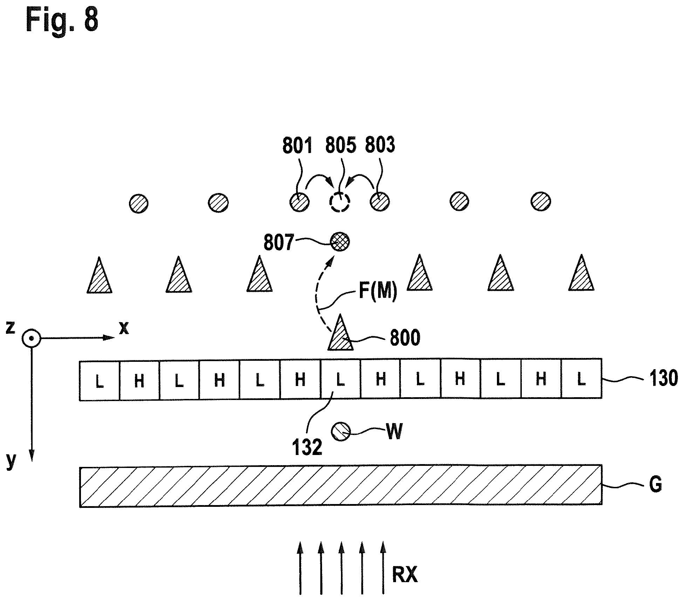

Figuren 8 und 9 veranschaulicht eine zusätzliche Maßnahme zur Luminanz-Korrektur zur Reduzierung von Hell-Dunkel-Schwankungen im nach Materialklassen eingefärbten Durchleuchtungsbild.

Die Helligkeitsinformation für jeden Bildpunkt wird üblicherweise basierend auf den Hi-Detektordaten jedes Bildpunkts bestimmt. Dies ist besonders sinnvoll, wenn die Hi-Detektorelemente so eingerichtet sind, dass sie auf das gesamte Röntgenspektrum der verwendeten Röntgenstrahlenquelle ansprechen.

Für die Luminanz-Korrektur folgender Ansatz als äußerst wirksam herausgefunden.

Zunächst wird anhand der Detektordatenmatrix 300* der Figur 3B die Materialdiskriminierung durchgeführt. Dazu können die jeweils rekonstruierten Detektordate bereits mit den vorstehenden Maßnahmen korrigiert worden sein. Als Ergebnis liegt eine Materialdatenmatrix vor, die für jeden Bildpunkt eine Materialinformation, beispielsweise die bestimmte Z-effektiv (Kernladungszahl), enthält.

Nun wird diese Materialdatenmatrix mit eine NxN Mittelwert- oder Median-Filter gefiltert. Als Ergebnis liegt eine gefilterte Materialdatenmatrix vor.

Mittels der gefilterten Materialdatenmatrix kann nun in der ursprünglichen Detektordatenmatrix 300, für alle Bildpunkte, für die keine Hi-Detektordaten vorliegen, anhand der jeweils gemessenen Lo-Detektordaten und der zugehörigen gefilterten Materialdaten basierend auf der Kennlinie des Detektorelements die theoretischen zugehörigen Hi-Detektordaten berechnet und entsprechend ein korrigierter Helligkeitswert bestimmt werden. "Kennlinie des Detektorelements" beschreibt die Absorptionseigenschaften und Materialcharakteristiken des Detektorelements.

Es hat sich gezeigt, dass dieses Vorgehen wirksam Helligkeitsschwankungen ausgleicht, aber kleinste Strukturen, wie beispielsweise Drähte, im Inspektionsobjekt im Durchleuchtungsbild erhalten bleiben.

Figur 8 veranschaulicht, wie mittels der hier vorgeschlagenen Helligkeitskorrektur, feine Strukturen eines Gegenstands im Durchleuchtungsbild über eine geschickte Korrektur der Helligkeitswerte erhalten werden können.

In der Situation der Figur 8 liegt auf dem homogenen Gegenstand G ein Draht W als Kleinststruktur. Der Draht W liegt an der Stelle des Lo-Detektorelements 132, welches an dieser Stelle im Vergleich zur Umgebung etwas stärker geschwächte Lo-Detektordaten erfasst. Die an dieser Stelle fehlenden Hi-Detektordaten würden aufgrund der homogenen Umgebung basierend auf den benachbarten Hi-Detektordaten 801, 803 zu überhöhten Hi-Detektordaten 805 führen.

Da die Helligkeit eines Bildpunktes in Durchleuchtungsbild im Wesentlichen von den Hi-Detektordaten bestimmt wird, würde der Draht W quasi im schlechtesten Fall wegefiltert werden. Mit der oben vorgestellten Maßnahme werden für die Helligkeitssteuerung die Hi-Detektordaten 807 anhand der tatsächlich gemessenen Lo-Detektordaten und den für diesen Bildpunkt bestimmten Materialwert (Z-effektiv) über die Kennlinie des Detektorelements bestimmt. Dies führt im Vergleich zu den anderen zur Verbesserung der Materialdiskriminierung vorgeschlagenen Maßnahmen zu einer besseren Auflösung von kleinsten Strukturen im Durchleuchtungsbild allein durch die damit erfolgte Luminanz-Korrektur oder Luminanz-Steuerung (Helligkeitssteuerung).

Es sei angemerkt, dass die Material-Diskriminierung und die Helligkeitssteuerung sind voneinander unabhängig und können alle zusammen angewandt werden. Es ist keine bestimmte Reihenfolge bevorzugt.

Alle hier vorgestellten Verfahren funktionieren ausreichend gut über die gesamte Detektorzeile, im Wesentlichen bis zum Rand im Abstand von der Anzahl der für die Korrektur benötigten Detektorelemente. An den Zeilenrändern ist aber auch der Tunnel der Röntgeninspektionsanlage physikalisch zu Ende. Damit ist der Randbereich der Detektorzeile für die Betrachtung uninteressant oder unwichtig.

## Patentansprüche

1. Verfahren zur Korrektur von Detektordaten, die von einer Inspektionsanlage (1) bereitgestellt wurden, wobei die Inspektionsanlage (1) aufweist einen Dual-Energie-Röntgenstrahlendetektor (100) zur Verwendung in einem Dual-Energie-Röntgenverfahren, mit einer quer zur Abtastrichtung anzuordnenden Detektorzeile (130) bestehend aus auf ein Röntgenspektrum unterschiedlich ansprechenden ersten Detektorelementen (132) und zweiten Detektorelementen (134), die jeweils abwechselnd in der Detektorzeile (130) nebeneinander angeordnet sind, wobei die ersten und zweiten Detektorelemente (132, 134) Röntgenstrahlung (XR) unabhängig voneinander erfassen, und wobei die Inspektionsanlage (1) für einen Transport in einer Abtastrichtung von Inspektionsobjekten (7) durch die Inspektionsanlage (1) zur Durchführung eines bildgebenden Inspektionsverfahren zur zerstörungsfreien Inspektion der Inspektionsobjekte (7) und zur Bereitstellung von die Inspektionsobjekte (7) beschreibenden Detektordaten basierend auf Erfassen von die Inspektionsobjekte (7) durchdringenden Röntgenstrahlen (XR) mit dem Detektor (100) eingerichtet ist, wobei die ersten Detektorelemente (132) erste Detektordaten und die zweiten Detektorelemente (134) zweite Detektordaten erzeugen;
wobei das Verfahren zur Korrektur der von der Inspektionsanlage (1) bereitgestellten Detektordaten von einer Verarbeitungsvorrichtung (410) zur Korrektur von Detektordaten ausgeführt wird und die folgenden Schritte aufweist:
(a1) Ableiten fehlender zweiter Detektordaten für den Ort eines ersten Detektorelements mit: Bestimmen eines Interpolationswerts gemessener zweiter Detektordaten von zu diesem ersten Detektorelement benachbarten zweiten Detektorelementen; Bestimmen eines Korrekturwerts basierend auf mit diesem ersten Detektorelement gemessenen ersten Detektordaten und benachbarter gemessener erster Detektordaten; und Korrigieren des Interpolationswerts mit dem Korrekturwert; und
(a2) Ableiten fehlender erster Detektordaten für den Ort eines zweiten Detektorelements mit: Bestimmen eines Interpolationswerts gemessener erster Detektordaten von zu diesem zweiten Detektorelement benachbarten ersten Detektorelementen; Bestimmen eines Korrekturwerts basierend auf mit diesem zweiten Detektorelement gemessenen zweiten Detektordaten und benachbarter gemessener zweiten Detektordaten; und Korrigieren des Interpolationswerts mit dem Korrekturwert;
**gekennzeichnet durch**
eine Korrektur eines basierend auf bestimmten Detektordaten eines Bildpunkts bestimmten zugeordneten Helligkeitswerts, mit den Schritten:
(b1) Bestimmung von Materialwerten für alle Bildpunkte basierend auf den für jeden Bildpunkt tatsächlich gemessenen Detektordaten und den für jeden Bildpunkt bestimmten Detektordaten, wobei die den Bildpunkten zugeordneten Materialwerte eine Materialinformationsmatrix definieren, indem in der Materialinformationsmatrix für jeden einem Detektorelement entsprechenden Bildpunkt ein Z-effektiv-Wert als Materialwert gespeichert ist;
(b2) Filterung der für alle Bildpunkte bestimmten Materialwerte in der Materialinformationsmatrix mittels einer Mittelwert-basierenden oder Median-basierenden Filteroperation, die jeweils um einen Bildpunkt herum NxN Materialwerte erfasst, wobei N eine ganze Zahl größer 3 ist;
(b3) Bestimmen an jedem Bildpunkt, an dem erste Detektordaten gemessen wurden, anhand des für diesen Bildpunkt bestimmten Materialwerts zu diesem Bildpunkt gehöriger theoretischer zweiter Detektordaten; und
(b4) Bestimmen eines jeweiligen Helligkeitswerts für alle Bildpunkte basierend auf den für den jeweiligen Bildpunkt vorliegenden gemessenen zweiten Detektordaten oder den theoretischen zweiten Detektordaten.

2. Verfahren gemäß Anspruch 1, wobei in dem Schritt (b3) mit Filterung der für alle Bildpunkte bestimmten Materialwerte in der Materialinformationsmatrix mittels einer Mittelwert-basierenden oder Median-basierenden Filteroperation, die jeweils um einen Bildpunkt herum NxN Materialwerte erfasst, N=5 gilt.

3. Verfahren gemäß Anspruch 1 oder 2, wobei
Bestimmen des Korrekturwerts in Schritt (a1) aufweist: Bilden der Differenz aus dem n-fachen der mit dem ersten Detektorelement gemessenen Detektordaten und der Summe von n in der Detektorzeile benachbarten gemessenen ersten Detektordaten; und/oder
Bestimmen des Korrekturwerts in Schritt (a2) aufweist: Bilden der Differenz aus dem n-fachen der mit dem zweiten Detektorelement gemessenen Detektordaten und der Summe von n in der Detektorzeile benachbarten gemessenen zweiten Detektordaten;
wobei n eine ganze, gerade Zahl mit n>=2 ist.

4. Verfahren gemäß einem der Ansprüche 1-3, wobei der Korrekturwert ein Korrekturfaktor ist und Korrigieren des Interpolationswerts mit dem Korrekturwert aufweist: Multiplizieren des Interpolationswerts mit dem Korrekturfaktor; und wobei
- Bestimmen des Korrekturfaktors in Schritt (a1) aufweist: Bilden der Differenz aus 1 und einem Quotienten aus einer Differenz der beiden in der Detektorzeile (130) linksseitig und rechtsseitig benachbart gemessenen zweiten Detektordaten und der Summe der beiden in der Detektorzeile (130) linksseitig und rechtsseitig benachbart gemessenen zweiten Detektordaten; oder
- Bestimmen des Korrekturfaktors in Schritt (a2) aufweist: Bilden der Differenz aus 1 und einem Quotienten aus einer Differenz der beiden in der Detektorzeile (130) linksseitig und rechtsseitig benachbart gemessenen ersten Detektordaten und der Summe der beiden in der Detektorzeile (130) linksseitig und rechtsseitig benachbart gemessenen ersten Detektordaten.

5. System (400) aus einer Inspektionsanlage (1) und einer Verarbeitungsvorrichtung (410), wobei die Inspektionsanlage (400) zur Bereitstellung von Detektordaten basierend auf der Durchleuchtung von Inspektionsobjekten (7) an die Verarbeitungsvorrichtung (410) eingerichtet ist und dazu mit der Verarbeitungsvorrichtung (410) für eine Datenkommunikation verbunden ist;
wobei die Inspektionsanlage (1) aufweist einen Dual-Energie-Röntgenstrahlendetektor (100) zur Verwendung in einem Dual-Energie-Röntgenverfahren, mit: einer quer zur Abtastrichtung anzuordnenden Detektorzeile (130) bestehend aus auf ein Röntgenspektrum unterschiedlich ansprechenden ersten Detektorelementen (132) und zweiten Detektorelementen (134), die jeweils abwechselnd in der Detektorzeile (130) nebeneinander angeordnet sind, wobei die ersten und zweiten Detektorelemente (132, 134) Röntgenstrahlung (XR) unabhängig voneinander erfassen;
wobei die Inspektionsanlage (1) für einen Transport in einer Abtastrichtung von Inspektionsobjekten (7) durch die Inspektionsanlage (1) zur Durchführung eines bildgebenden Inspektionsverfahren zur zerstörungsfreien Inspektion der Inspektionsobjekte (7) und zur Bereitstellung von die Inspektionsobjekte (7) beschreibenden Detektordaten basierend auf Erfassen von die Inspektionsobjekte (7) durchdringenden Röntgenstrahlen (XR) mit dem Detektor (100) eingerichtet ist, wobei die ersten Detektorelemente (132) erste Detektordaten und die zweiten Detektorelemente (134) zweite Detektordaten erzeugen; und
wobei die Verarbeitungsvorrichtung (410) zur Korrektur der Detektordaten zur Durchführung eines Verfahrens gemäß einem der Ansprüche 1-4 eingerichtet ist.

6. System gemäß Anspruch 5, wobei
die ersten Detektorelemente (132) und zweiten Detektorelemente (134) jeweils eine Fotodiode (137) aufweisen, die jeweils mit einem Szintillator-Material (133, 135) versehen ist, das zur Einstellung der Empfindlichkeit für Röntgenstrahlen des Röntgenspektrums ausgewählt und in der von der Röntgenstrahlung zu durchlaufenden Dicke dimensioniert ist.

7. System gemäß Anspruch 5 oder 6, wobei
sich die ersten Detektorelemente (132) und die zweiten Detektorelemente (134) auf derselben Seite (121) eines Substrats (120), oder
sich die ersten Detektorelemente (132) auf der einen Seite (121) des Substrats (120) und die zweiten Detektorelemente (134) auf der anderen Seite (122) des Substrats (120) befinden.

8. Computerprogrammprodukt mit einem Computerprogramm das Softwaremittel zur Durchführung des Verfahrens nach einem der Ansprüche 1-4 aufweist, wenn das Computerprogramm auf einem Computer ausgeführt wird.

9. Datenträger mit einem Computerprogrammprodukt oder Datenstrom mit elektronisch lesbaren Steuersignalen übertragend das Computerprogrammprodukt, wobei das Computerprogrammprodukt eines gemäß Anspruch 8 ist.

## Claims

1. Method for correcting detector data provided by an inspection system (1), wherein the inspection system (1) comprises a dual-energy X-ray detector (100) for use in a dual-energy X-ray method, having a detector line (130) to be arranged transversely to the scanning direction and consisting of first detector elements (132) and second detector elements (134) that respond differently to an X-ray spectrum, which elements are arranged alternately next to one another in the detector line (130), wherein the first and second detector elements (132, 134) detect X-radiation (XR) independently of each other, and wherein the inspection system (1) is set up for transportation in a scanning direction of inspection objects (7) through the inspection system (1) for carrying out an imaging inspection method for the non-destructive inspection of the inspection objects (7) and for providing detector data describing the inspection objects (7) based on detection of X-rays (XR) passing through the inspection objects (7) with the detector (100), wherein the first detector elements (132) generate first detector data and the second detector elements (134) generate second detector data;
wherein the method for correcting the detector data provided by the inspection system (1) is carried out by a processing device (410) for correcting detector data and comprises the following steps:
(a1) deriving missing second detector data for the location of a first detector element by: determining an interpolation value of measured second detector data from second detector elements neighboring said first detector element; determining a correction value based on measured first detector data from said first detector element and neighboring measured first detector data; and correcting said interpolation value with said correction value; and
(a2) deriving missing first detector data for the location of a second detector element, by: determining an interpolation value of measured first detector data from first detector elements neighboring said second detector element; determining a correction value based on measured second detector data from said second detector element and neighboring measured second detector data; and correcting said interpolation value with said correction value;
**characterized by**
a correction of an associated brightness value determined on the basis of specific detector data of a pixel, comprising the steps of:
(b1) determining material values for all image points based on the detector data actually measured for each image point and the detector data determined for each image
point, the material values associated with the image points defining a material information matrix by storing a Z-effective value as a material value in the material information matrix for each image point corresponding to a detector element;
(b2) filtering the material values determined for all image points in the material information matrix by means of a mean-based or median-based filter operation, which in each case detects NxN material values around an image point, where N is an integer greater than 3;
(b3) determining, at each pixel at which first detector data has been measured, on the basis of the material value determined for this pixel, the theoretical second detector data associated with this pixel; and
(b4) determining a respective brightness value for all pixels based on the measured second detector data or the theoretical second detector data for the respective pixel.

2. The method according to claim 1, wherein in step (b3) the material values determined for all image points in the material information matrix are filtered by means of a mean-based or median-based filter operation, which in each case detects NxN material values around an image point, where N=5.

3. The method according to claim 1 or 2, wherein
determining the correction value in step (a1) comprises: forming the difference between the n-fold of the detector data measured with the first detector element and the sum of n neighboring measured first detector data in the detector line; and/or
determining the correction value in step (a2) comprises: forming the difference between the n-fold of the detector data measured with the second detector element and the sum of n second detector data measured adjacent in the detector line;
wherein n is an even integer with n>=2.

4. The method according to any one of claims 1-3, wherein the correction value is a correction factor and correcting the interpolation value with the correction value comprises multiplying the interpolation value by the correction factor; and wherein
determining the correction factor in step (a1) comprises: forming the difference between 1 and a quotient of a difference between the two second detector data measured adjacently on the left and right in the detector line (130) and the sum of the two second detector data measured adjacently on the left and right in the detector line (130); or
determining the correction factor in step (a2) comprises: forming the difference between 1 and a quotient of a difference between the two first detector data measured in the detector line (130) on the left-hand side and on the right-hand side and the sum of the two first detector data measured in the detector line (130) on the left-hand side and on the right-hand side.

5. System (400) comprising an inspection system (1) and a processing device (410), the inspection system (400) being set up to provide detector data based on the transillumination of inspection objects (7) to the processing device (410) and being connected to the processing device (410) for data communication;
wherein the inspection system (1) comprises a dual-energy X-ray detector (100) for use in a dual-energy X-ray method, comprising: a detector line (130) to be arranged transversely to the scanning direction, consisting of first detector elements (132) and second detector elements (134) that respond differently to an X-ray spectrum, which are arranged alternately next to one another in the detector line (130), the first and second detector elements (132, 134) detecting X-rays (XR) independently of one another;
wherein the inspection system (1) is arranged for transportation in a scanning direction of inspection objects (7) through the inspection system (1) for performing an imaging inspection method for non-destructive inspection of the inspection objects (7) and for providing detector data describing the inspection objects (7) based on detection of X-rays (XR) passing through the inspection objects (7) with the detector (100), wherein the first detector elements (132) generate first detector data and the second detector elements (134) generate second detector data; and
wherein the processing device (410) is configured to correct the detector data to perform a method according to one of claims 1-4.

6. The system according to claim 5, wherein
said first detector elements (132) and second detector elements (134) each comprise a photodiode (137) each provided with a scintillator material (133, 135) selected for adjusting the sensitivity for X-rays of the X-ray spectrum and dimensioned in the thickness to be traversed by the X-radiation.

7. The system according to claim 5 or 6, wherein
the first detector elements (132) and the second detector elements (134) are on the same side (121) of a substrate (120), or
the first detector elements (132) are located on one side (121) of the substrate (120) and the second detector elements (134) are located on the other side (122) of the substrate (120).

8. Computer program product comprising a computer program having software means for carrying out the method according to any one of claims 1-4 when the computer program is executed on a computer.

9. Transferring a computer program product on a data carrier or a data stream with electronically readable control signals, wherein the computer program product is one according to claim 8.

## Revendications

1. Procédé de correction de données de détection fournies par un système d'inspection (1), le système d'inspection (1) comprenant un détecteur de rayons X à double énergie (100) destiné à être utilisé dans un procédé de radiographie à double énergie, avec une ligne de détecteurs (130) à disposer transversalement à la direction de balayage, composée de premiers éléments de détecteur (132) et de deuxièmes éléments de détecteur (134) qui réagissent différemment à un spectre de rayons X et qui sont disposés en alternance les uns à côté des autres dans la ligne de détecteurs (130), les premiers et les seconds éléments détecteurs (132, 134) détectant les rayons X (XR) indépendamment les uns des autres, et l'installation d'inspection (1) étant conçue pour le transport dans une direction de balayage d'objets à inspecter (7) à travers l'installation d'inspection (1) afin de réaliser un procédé d'inspection par imagerie pour l'inspection non destructive des objets à inspecter (7) et pour fournir des données de détection décrivant les objets à inspecter (7) sur la base de la détection de rayons X (XR) à l'aide du détecteur (100), les premiers éléments de détection (132) générant des premières données de détection et les deuxièmes éléments de détection (134) générant des deuxièmes données de détection;
le procédé de correction des données de détection fournies par le système d'inspection (1) étant exécuté par un dispositif de traitement (410) pour la correction des données de détection et comprenant les étapes suivantes:
(a1) déduire les deuxièmes données de détection manquantes pour l'emplacement d'un premier élément de détection avec : déterminer une valeur d'interpolation de deuxièmes données de détecteur mesurées à partir de deuxièmes éléments de détecteur adjacents à ce premier élément de détecteur ; déterminer une valeur de correction basée sur des premières données de détecteur mesurées avec ce premier élément de détecteur et des premières données de détecteur mesurées adjacentes ; et corriger la valeur d'interpolation avec la valeur de correction; et
(a2) déduire les premières données de détection manquantes pour l'emplacement d'un deuxième élément de détection avec : déterminer une valeur d'interpolation de premières données de détection mesurées à partir de premiers éléments de détection adjacents à ce deuxième élément de détection ; déterminer une valeur de correction basée sur des deuxièmes données de détection mesurées avec ce deuxième élément de détection et des deuxièmes données de détection mesurées adjacentes ; et corriger la valeur d'interpolation avec la valeur de correction;
**caractérisé par**
une correction d'une valeur de luminosité attribuée déterminée sur la base de certaines données de détection d'un point d'image, comprenant les étapes suivantes:
(b1) Détermination des valeurs de matériau pour tous les pixels sur la base des données de détection effectivement mesurées pour chaque pixel et des données de détection déterminées pour chaque point d'image, les valeurs de matériau attribuées aux points d'image définissant une matrice d'informations sur les matériaux, dans laquelle une valeur efficace Z est enregistrée comme valeur de matériau dans la matrice d'informations sur les matériaux pour chaque point d'image correspondant à un élément de détection;
(b2) Filtrage des valeurs de matériau déterminées pour tous les points d'image dans la matrice d'informations sur les matériaux au moyen d'une opération de filtrage basée sur la valeur moyenne ou la médiane, qui saisit NxN valeurs de matériau autour de chaque point d'image, N étant un nombre entier supérieur à 3;
(b3) Déterminer, pour chaque point d'image où les premières données de détection ont été mesurées, à l'aide de la valeur de matériau déterminée pour ce point d'image, les deuxièmes données de détection théoriques associées à ce point d'image; et
(b4) Déterminer une valeur de luminosité respective pour tous les points d'image sur la base des deuxièmes données de détection mesurées disponibles pour le point d'image respectif ou des deuxièmes données de détection théoriques.

2. Procédé selon la revendication 1, dans lequel, à l'étape (b3), N=5, avec filtrage des valeurs de matériau déterminées pour tous les points d'image dans la matrice d'informations de matériau au moyen d'une opération de filtrage basée sur la valeur moyenne ou la médiane, qui enregistre NxN valeurs de matériau autour de chaque point d'image.

3. Procédé selon la revendication 1 ou 2, dans lequel
de déterminer la valeur de correction à l'étape (a1): en formant la différence entre n fois les données de détection mesurées avec le premier élément de détection et la somme de n premières données de détection mesurées adjacentes dans la ligne de détection; et/ou
de déterminer la valeur de correction à l'étape (a2): en formant la différence entre n fois les données de détection mesurées avec le deuxième élément de détection et la somme de n deuxièmes données de détection mesurées adjacentes dans la ligne de détection;
où n est un nombre entier pair avec n >= 2.

4. Procédé selon l'une des Revendications 1 à 3, dans lequel la valeur de correction est un facteur de correction et la correction de la valeur d'interpolation avec la valeur de correction comprend : la multiplication de la valeur d'interpolation par le facteur de correction ; et dans lequel
- de déterminer le facteur de correction à l'étape (a1) : en formant la différence entre 1 et un quotient d'une différence entre les deux deuxièmes données de détecteur mesurées de manière adjacente à gauche et à droite dans la ligne de détecteur (130) et la somme des deux deuxièmes données de détecteur mesurées de manière adjacente à gauche et à droite dans la ligne de détecteur (130); ou
- de déterminer le facteur de correction à l'étape (a2) : en formant la différence entre 1 et un quotient d'une différence entre les deux premières données de détecteur mesurées de manière adjacente à gauche et à droite dans la ligne de détecteur (130) et la somme des deux premières données de détecteur mesurées de manière adjacente à gauche et à droite dans la ligne de détecteur (130).

5. Système (400) composé d'une installation d'inspection (1) et d'un dispositif de traitement (410), l'installation d'inspection (400) étant conçue pour fournir des données de détection basées sur la radioscopie d'objets d'inspection (7) à l'appareil de traitement (410) et étant connectée à cet effet à l'appareil de traitement (410) pour la communication de données;
l'installation d'inspection (1) comportant un détecteur de rayons X à double énergie (100) destiné à être utilisé dans un procédé de radiographie à double énergie, avec : une ligne de détecteurs (130) à disposer transversalement à la direction de balayage, constituée de premiers éléments de détecteur (132) et de deuxièmes éléments de détecteur (134) qui réagissent différemment à un spectre de rayons X et qui sont disposés en alternance les uns à côté des autres dans la ligne de détecteurs (130), les premiers et les seconds éléments détecteurs (132, 134) détectant les rayons X (XR) indépendamment les uns des autres;
l'installation d'inspection (1) étant conçue pour être transportée dans une direction de balayage d'objets à inspecter (7) à travers l'installation d'inspection (1) afin de réaliser un procédé d'inspection par imagerie pour l'inspection non destructive des objets à inspecter (7) et pour fournir des données de détection décrivant les objets à inspecter (7) sur la base de la détection de rayons X (XR) ) à l'aide du détecteur (100), les premiers éléments de détection (132) générant des premières données de détection et les deuxièmes éléments de détection (134) générant des deuxièmes données de détection; et
le dispositif de traitement (410) étant conçu pour corriger les données de détection afin de mettre en oeuvre un procédé selon l'une des Revendications 1 à 4.

6. Système selon la Revendication 5, dans lequel
les premiers éléments détecteurs (132) et les seconds éléments détecteurs (134) comportent chacun une photodiode (137) qui est munie d'un matériau scintillateur (133, 135) choisi pour ajuster la sensibilité aux rayons X du spectre des rayons X et dimensionné en fonction de l'épaisseur que doit traverser le rayonnement X.

7. Système selon la revendication 5 ou 6, dans lequel
les premiers éléments détecteurs (132) et les deuxièmes éléments détecteurs (134) se trouvent sur le même côté (121) d'un substrat (120), ou
les premiers éléments détecteurs (132) se trouvent sur un côté (121) du substrat (120) et les seconds éléments détecteurs (134) sur l'autre côté (122) du substrat (120).

8. Produit logiciel comprenant un programme informatique qui présente un moyen logiciel pour la mise en oeuvre du procédé selon l'une des revendications 1 à 4, lorsque le programme informatique est exécuté sur un ordinateur.

9. Support de données comprenant un produit logiciel ou un flux de données avec des signaux de commande lisibles électroniquement transmettant le produit logiciel, le produit logiciel étant conforme à la revendication 8.
